(19) Europäisches Patentamt
European Patent Office
Office européen des brevets

(11) **EP 0 987 804 A1**

(12) **EUROPÄISCHE PATENTANMELDUNG**

(43) Veröffentlichungstag:
22.03.2000 Patentblatt 2000/12

(51) Int. Cl.⁷: **H02B 1/28**

(21) Anmeldenummer: **99116556.4**

(22) Anmeldetag: **24.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.09.1998 DE 29816534 U**

(71) Anmelder: **Klein, Jürgen**
**52159 Roetgen (DE)**

(72) Erfinder: **Klein, Jürgen**
**52159 Roetgen (DE)**

(74) Vertreter:
**Müller-Gerbes, Margot, Dipl.-Ing.**
**Friedrich-Breuer-Strasse 112**
**53225 Bonn (DE)**

(54) **Klemmenkasten**

(57)   Die Erfindung betrifft einen Klemmenkasten zur Aufnahme von elektrischen und elektronischen Bauelementen mit einem Korpus mit einem nach innen stufenförmig abgewinkelten Randsteg (11) und einem einen umlaufenden in Richtung auf den Korpus vorstehenden Deckelrand (20) aufweisenden Deckel (2) der mittels durch den Deckel geführter Deckelschrauben (3) mit dem Korpus im Bereich der stufenförmigen Abwinkelung des Korpus angebrachten Muttern (6) verschraubbar ist und bei dem an der Unterseite des Deckels eine umlaufende elastische Dichtung (4) angebracht ist, die beim Aufsetzen des Deckels auf den Korpus mit dem abgewinkelten Randsteg desselben in Wirkverbindung zwecks Abdichtung tritt, bei dem die Muttern (6) für die Aufnahme der Deckelschrauben (3) auf dem stufenförmigen Absatz des abgewinkelten Randsteges (11) des Korpus in einer den auf den Korpus aufzusetzenden Deckel zentrierenden Position befestigt sind, wobei die Zentrierung des Deckels (2) vor dem abdichtenden Anpressen des Randsteges (11) in die Dichtung (4) einsetzt.

Fig.3

**Beschreibung**

Die Erfindung betrifft einen Klemmenkasten zur Aufnahme von elektrischen und elektronischen Bauelementen mit einem Korpus mit einem nach innen stufenförmig abgewinkelten Randsteg und einem einen umlaufenden in Richtung auf den Korpus vorstehenden Deckelrand aufweisenden Deckel, der mittels durch den Deckel geführter Deckelschrauben mit dem Korpus in im Bereich der stufenförmige Abwinkelung des Korpus angebrachten Muttern verschraubbar ist und bei dem an der Unterseite des Deckels eine umlaufende elastische Dichtung angebracht ist, die beim Aufsetzen des Deckels auf den Korpus mit dem abgewinkelten Randsteg desselben in Wirkverbindung zwecks Abdichtung tritt.

Klemmenkästen sind kleinere Elektrogehäuse, in der Regel nicht größer als 600 x 600 x 150 mm, die in ihrer Hauptfunktion zur Aufnahme von Klemmen, d. h. elektrischen oder elektronischen Bauelementen dienen. Da Klemmen meistens nicht bediener- oder serviceintensiv sind, haben Klemmenkästen in der Regel einen Korpus — Gehäuse — mit einem Schraubdeckel, im Gegensatz zu Wandgehäusen, die meist eine scharnierte Tür haben.

Bei allen Gehäusen und Kästen, die der Aufnahme von elektrischen und elektronischen Bauelementen dienen, ist es erforderlich, daß das mit dem Deckel verschlossene Gehäuse mittels einer Dichtung gegen die Umgebung abgedichtet ist. Hierzu werden in der Regel umlaufende Dichtungen auf der Innenseite des Gehäusedeckels vorgesehen, die beim Schließen des Deckels gegen die Korpuswandung gedrückt werden, und abdichten. Der Widerstand, den diese Dichtung dem Eindringen von Feststoffen und/oder Flüssigkeit entgegensetzt, wird nach DIN-Normen in Schutzarten klassifiziert.

Für eine gute Abdichtung ist es erforderlich, daß Deckel und Korpus bei jedem Schließvorgang recht genau wieder so zusammen positioniert sind, daß die Funktionsteile der Dichtung ihre Dichtungsfunktion einwandfrei erfüllen. Bei mittels Scharnieren an einem Korpus befestigten Deckeln ist diese Positionierung in aller Regel durch das Scharnier sichergestellt.

Sind die Deckel hingegen angeschraubt, wie z. B. bei Klemmenkästen, so ist eine Positionierung von Korpus und Deckel durch die Verschraubung allein nur im relativ groben Maße gegeben. Es ist dann jeweils die Frage zu entscheiden, ob die gegebene Genauigkeit für die geforderte Dichtqualität ausreicht. Bei bekannten Klemmenkästen mit angeschraubten Deckeln erfolgt die Positionierung der Funktionspartner Korpus und Deckel über die Schrauben, mit denen sie verbunden werden.

Der Erfindung liegt die Aufgabe zugrunde, eine genaue Positionierung und Zentrierung von Korpus und Deckel in Verbindung mit einer hohen Dichtung zu erreichen.

Die Erfindung löst die gestellte Aufgabe bei einem gattungsgemäßen Klemmenkasten gemäß den kennzeichnenden Merkmalen des Anspruches 1.

Vorteilhafte Weiterbildungen der Erfindung sind den kennzeichnenden Merkmalen der Unteransprüche entnehmbar.

Zum Ausschalten von unnötigen Risiken der Abdichtung beim Verschließen von Klemmenkästen durch Verschrauben des Deckels am Korpus wird erfindungsgemäß vorgeschlagen, daß die Muttern für die Aufnahme der Deckelschrauben auf dem stufenförmigen Absatz des abgewinkelten Randsteges des Korpus in einer den auf den Korpus aufzusetzenden Deckel zentrierenden Position befestigt sind, wobei die Zentrierung des Deckels vor dem abdichtenden Anpressen des Randsteges in die Dichtung einsetzt. Auf diese Weise wird erreicht, daß bei einem Klemmenkasten mit geschraubtem Deckel der Deckel mittels zentrierenden auf den Korpus geschweißter Muttern bereits feinzentriert wird, bevor der Kontakt der Funktionsflächen, nämlich Randsteg und Dichtung erfolgt. Eine Belastung der Dichtung und der anderen Funktionspartner durch eine senkrecht zur Schraubdichtung wirkende Schubspannung beim Anziehen der Schrauben wird vermieden.

Bevorzugt ist die der Zentrierung des Deckels beim Aufsetzen dienende Mutter mit Schraubbohrung in Zylinderform ausgebildet, die auf der Einschraubseite der Deckelschraube in einen äußeren Zentrierkegel übergeht, so daß der Deckel, selbst bei ungenauem Heranführen an den Korpus über den äußeren Zentrierkegel der Mutter geführt und am äußeren Zylinder entlang positioniert wird. Des weiteren ist die Mutter auf der der Einschraubseite der Deckelschraube zugewandten Seite mit einem inneren Zentrierkegel ausgebildet, so daß die ungenau an die Schraubbohrung der Mutter, d. h. außerhalb der Achse X der Schraubbohrung der Mutter herangeführte Deckelschraube über den inneren Zentrierkegel in die Achse X zentriert wird.

Des weiteren wird erfindungsgemäß vorgeschlagen, die Mutter nahe der der Einbauseite gegenüberliegenden Befestigungsseite am Korpus mit einer äußeren Ringnut auszustatten. Diese Ringnut erleichtert als Wärmewiderstand das Anschweißen der Mutter beispielsweise an einem aus dünnen Stahlblechen hergestellten Korpus. Darüber hinaus kann diese Ringnut der Befestigung wie Anklipsen von Zubehörteilen, wie Scharnieren oder Strahlungsabsorbern dienen.

In der Zeichnung wird die Erfindung anhand von Beispielen näher erläutert. Es zeigen

Figur 1          Draufsicht auf die Deckelseite eines Klemmenkastens,

Figur 2          auszugsweiser Querschnitt gemäß Schnitt A — A von Figur 1 für eine Ausführung gemäß Stand der Technik,

| Figur 3 | auszugsweiser Querschnitt gemäß Schnitt B — B von Figur 1 für einen Klemmenkasten in erfindungsgemäßer Ausführung, |
| --- | --- |
| Figuren 4, 5 und 6 | schematische Darstellung zur Positionierung und Zentrierung der Deckelverschraubung gemäß Stand der Technik Figur 2, |
| Figur 7 | Querschnitt durch die Mutter gemäß Figur 3, |
| Figuren 8 und 9 | schematische Darstellung der Positionierung und Zentrierung der erfindungsgemäßen Deckelverschraubung gemäß Figur 3. |

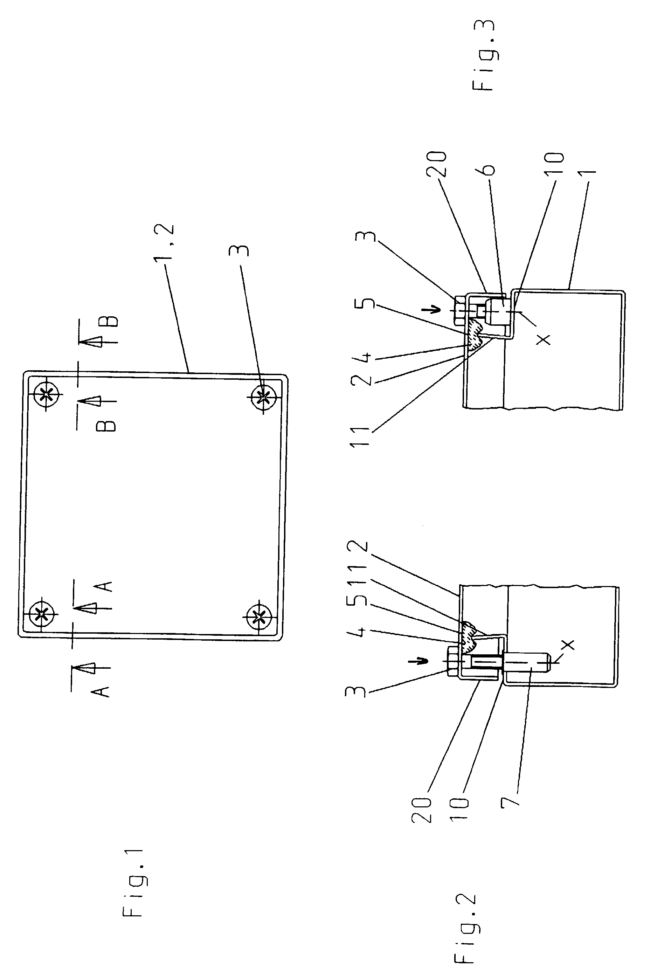

In der Figur 1 ist schematisch ein Klemmenkasten 1, 2 in der Draufsicht dargestellt, wobei in den Eckbereichen jeweils eine Deckelschraube 3 zum Festschrauben des Deckels 2 an dem Korpus 1 angeordnet ist.

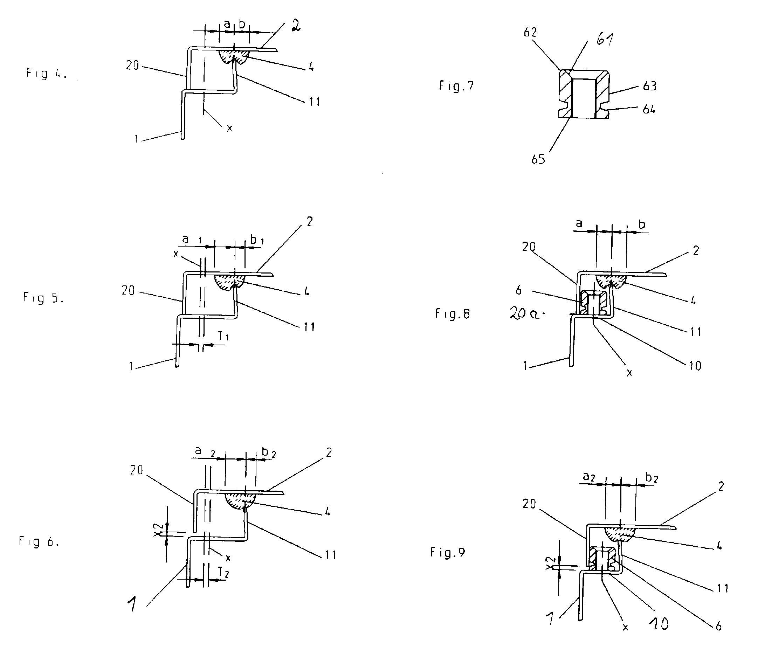

In der Figur 2 ist der Querschnitt A — A nach Figur 1 in einer Ausführung gemäß dem Stand der Technik auszugsweise dargestellt. Der Korpus 1 des Klemmenkastens weist am oberen Rand einen stufenförmig nach innen abgewinkelten Randsteg 11 mit der Absatzstufe 10 auf. An der Unterseite des Deckels 2, der außenseitig mit einem Richtung Korpus 1 vorstehenden umlaufenden Deckelrand 20 versehen ist, ist eine umlaufend mittels einer Klebeschicht 5 haftfest angebrachte elastische Dichtung 4 vorgesehen, die beispielsweise einen halbrunden Querschnitt aufweist und beispielsweise aus einem geeigneten Schaumstoff besteht. Die Dichtung 4 kann auch unmittelbar auf die Deckelunterseite 2 aufgeschäumt werden. Zum Verschrauben von Korpus 1 und Deckel 2 weist der Deckel in aller Regel Durchgangsbohrungen, die hier nicht dargestellt sind, auf, durch welche die Deckelschraube 3 hindurchgeführt wird. Am Korpus befindet sich eine beispielsweise angeschweißte Mutter 7, die üblicherweise an der Innenseite des Korpus bzw. Unterseite der Absatzstufe 10 angebracht ist. Ein Loch führt dann durch die Absatzstufe 10. Werden die Schrauben 3 mit den Muttern 7 gemäß Figur 2 verschraubt, wird der Deckel 2 in Richtung auf den Korpus 1 angezogen und der Randsteg 11 des Korpus kommt mit der elastischen Dichtung 4 in Wirkverbindung und es wird ein so hoher Flächendruck erzeugt, daß die gewünschte Dichtwirkung erzielt wird. Als Muttern 7 werden üblicherweise Nietmuttern oder Aufschweißmuttern verwendet. Die Zentrierung von Deckel und Korpus findet gemäß dieser Ausführung gemäß dem Stand der Technik über die Deckelschrauben 3, d. h. die Gewinde statt.

Hierbei erweist es sich als nachteilig, daß die Vorpositionierung von Deckel und Korpus zumeist nach Augenmaß erfolgt, in dem der Deckel auf den Korpus gelegt wird. Nach der Vorpositionierung haben alle Funktionspartner Kontakt, siehe beispielsweise Figur 2 und Figur 6. Die erste Phase der Feinpositionierung erfolgt in diesem Kontakt, bis eine oder mehr Schrauben in den Gewinden des anderen Teiles gegriffen haben, d. h. in der Mutter. Die zweite Phase der Feinpositionierung erfolgt dann mit dem Anziehen der Schrauben dadurch, daß sich mit zunehmenden Anzug, d. h. Einschrauben der Schraube in Pfeilrichtung, siehe Figur 2 und kürzer werdender freier Schraubenlänge die Toleranz der Zentrierung verringert, soweit Schrauben zur Herstellung einer Zentrierung geeignet sind, bis der Deckel auf dem Korpus 1 aufsitzt, siehe Figur 4 und 5. Für den Dichtvorgang ergeben sich bei der beschriebenen Art der Verschraubung gemäß Figur 2 zwei Nachteile:

1. Die Dichtung 4 wird nicht an der konstruktiv vorgesehenen Stelle kontaktet, sondern um eine senkrecht zu den Schraubenachsen X auftretende Toleranz T1 versetzt, siehe Figur 5. Auf diese Weise wird die Dichtwirkung insbesondere von freigeschäumten und halbrunden Dichtungen und ihre Flächenpressung verringert.

2. Durch die beim Anschraubvorgang erfolgende Feinpositionierung der Funktionspartner entsteht eine permanente senkrecht zur Schraubrichtung wirkende Schubspannung in der Dichtung und zwischen den Funktionspartnern, die zu unerwünschten Deformationen aller beteiligten Teile Korpus, Deckel und Dichtung führt. Insbesondere erhält die Dichtung, die durch die Flächenpressung ohnehin schon extrem belastet ist, eine zusätzliche Spannungskomponente, die nicht zur Dichtfunktion benötigt wird. Der hierdurch entstehende mehrachsige Spannungszustand verkürzt die Lebensdauer der Dichtung. Die zusätzliche Schubspannung muß auch von der Klebestelle der Dichtung am Deckel aufgebracht werden, die normalerweise nur Normalspannungen aufzunehmen hat.

In der Figur 4 ist der Sollzustand dargestellt, d. h. der Randsteg 11 soll die Dichtung 4 mittig kontaktieren, so daß $a = b$ ist. Üblicherweise ist jedoch der Ist-Zustand der, wie in der Figur 5 dargestellt, d. h. $a_1$ ist ungleich $b_1$ bzw. $a_1$ $-b_1 = T1$ nämlich entspricht der auftretenden Toleranz und Abweichung der Zentrierung durch die Deckelschraube von der Schraubachse X.

Erwünscht ist jedoch, daß die in der Figur 6 dargestellte Toleranz T2 bereits zu Beginn des Dichtungskontaktes zwischen Dichtung 4 und Randsteg 11 beim Schließen des Klemmenkastens 1 mittels des Deckels 2, wenn also der Abstand zwischen unterem Deckelrand 20 und Korpus 1 noch X2 beträgt, bereits gegen 0 geht.

Der Erfindung löst die Aufgabe, zu Beginn des Dichtungskontaktes beim Abstand X2 bereits die Toleranz T2 zu 0 zu machen, so daß stets der Sollzustand gemäß Figur 4 beim Verschließen des Korpus mittels des Deckels erreicht wird.

In der Zeichnung ist in der Figur 3 der Schnitt B — B durch den Klemmenkasten gemäß Figur 1 mit erfindungsgemäßer Ausbildung der Anschraub- und Zentriervorrichtung dargestellt. Auf der Absatzstufe 10 des Korpus ist außenseitig die Mutter 6 befestigt, beispielsweise angeschweißt. Die Mutter 6 ist in der Figur 7 im Querschnitt dargestellt. Die Mutter 6 weist die durchgehende zentrische Gewindebohrung 65 auf, die auf ihrer der Einschraubseite der Deckelschraube zugewandten Seite mit einem inneren Zentrierkegel 61 zum Einführen der Deckelschraube ausgebildet ist. Außenseitig schließt sich an den inneren Zentrierkegel 61 der äußere Zentrierkegel 62 an. Dieser geht dann in den Außenzylinder 63 der Mutter 6 über. Nahe der Befestigungsseite der Mutter 6 an dem Korpus ist die Ringnut 64 ausgebildet.

Beim Anschweißen der Mutter an dem Korpus wird hierdurch ein Wärmewiderstand gebildet und damit das schnelle Abfließen von Wärme von der Schweißnaht behindert. Die Muttern 6 werden so nahe dem Rand der Absatzstufe 10 angebracht, daß jeweils der äußere Abstand zweier einander gegenüber angeordneter Muttern (also Achsabstand plus ein Mutterdurchmesser) am Korpus geringfügig kleiner als der innere Abstand der jeweiligen einander gegenüberliegenden Deckelränder, um eine paßgenaue Position und Zentrierung zu erreichen.

Wie aus der Figur 3 und Figur 9 ersichtlich, wird der Deckel 2 beim Aufsetzen auf den Korpus 1 entlang der äußeren Zentrierkegel 62 der Muttern 6 und entlang des Außenzylinders 63 geführt, positioniert und zentriert, und zwar bereits zu dem Zeitpunkt, zudem der Randsteg 11 die Dichtung 4 kontaktiert aber noch nicht zusammenpreßt, d. h. noch zu einem Zeitpunkt, wo der untere Deckelrand 20 mit dem Abstand X2 von der Stufe 10 des Korpus entfernt ist. Die Schraube, angedeutet durch die Achse X der Schraubbohrung der Mutter wird beim Einführen in den inneren Zentrierkegel der Mutter 6 ebenfalls zentriert, so daß beim weiteren Zusammenführen bis zum Aufsetzen des Deckels auf den Korpus, siehe Figur 8 eine symmetrische Zusammenpressung der Dichtung 4 durch den Randsteg 11 erfolgt, d. h. a ist b. Hierbei spielt es keine Rolle, ob der Randsteg 11 senkrecht von der Stufe 10 abgewinkelt ist oder unter einem spitzen Winkel. Die Dichtung weist bevorzugt eine gewölbte, oder halbrunde Gestalt auf, um mittig eine besonders hohe Flächenpressung und Dichtwirkung zu erzielen.

Die erfindungsgemäße Zentrierung und Positionierung mit mittels der mehrere Funktionen aufweisenden und ausübenden Mutter 6 ermöglicht, daß bereits beim Zusammenführen von Deckel und Korpus gemäß Figur 9, solange die Dichtung 4 noch nicht zusammengepreßt ist, auch hier ein symmetrischer Angriff durch den Randsteg 11 erfolgt, so daß a2 = b2 wird.

Die formschlüssige Zentrierung von Korpus 1 und Deckel 2 durch die Muttern 6 bleibt auch nach Beendigung des Verschraubungsvorganges erhalten, d. h. wenn der Deckelrand 20 mit seiner unteren Kante 20a auf dem Korpus-Absatz 10 aufsetzt. Die Position des Deckels zum Korpus wird hierdurch stabilisiert. Der verschraubte Klemmenkasten wird hierdurch unempfindlich und robust gegen mechanische Beanspruchung

**Patentansprüche**

1. Klemmenkasten zur Aufnahme von elektrischen und elektronischen Bauelementen mit einem Korpus mit einem nach innen stufenförmig abgewinkelten Randsteg und einem einen umlaufenden in Richtung auf den Korpus vorstehenden Deckelrand aufweisenden Deckel der mittels durch den Deckel geführter Deckelschrauben mit dem Korpus im Bereich der stufenförmigen Abwinkelung des Korpus angebrachten Muttern verschraubbar ist und bei dem an der Unterseite des Deckels eine umlaufende elastische Dichtung angebracht ist, die beim Aufsetzen des Deckels auf den Korpus mit dem abgewinkelten Randsteg desselben in Wirkverbindung zwecks Abdichtung tritt, **dadurch gekennzeichnet,** daß die Muttern (6) für die Aufnahme der Deckelschrauben (3) auf dem stufenförmigen Absatz (10) des abgewinkelten Randsteges (11) des Korpus (1) in einer den auf den Korpus aufzusetzenden Deckel (2) zentrierenden Position befestigt sind, wobei die Zentrierung des Deckels (2) vor dem abdichtenden Anpressen des Randsteges (11) in die Dichtung (4) einsetzt.

2. Klemmenkasten nach Anspruch 1, dadurch gekennzeichnet, daß die Mutter (6) mit Schraubbohrung (65) eine Zylinderform (63) aufweist, die auf der Einschraubseite der Deckelschraube (3) in einen äußeren Zentrierkegel (62) übergeht.

3. Klemmenkasten nach Anspruch 1 oder 2, dadurch gekennzeichnet, daß die Mutter (6) auf der Einschraubseite der Deckelschraube mit einem inneren Zentrierkegel (61) zum Einführen der Deckelschraube (3) ausgebildet ist.

4. Klemmenkasten nach einem der Ansprüche 1 bis 3, dadurch gekennzeichnet, daß die Mutter (6) nahe der Einbauseite gegenüberliegenden Befestigungsseite eine äußere Ringnut (64) aufweist.

5. Klemmenkasten nach Anspruch 4, dadurch gekennzeichnet, daß Zubehörteile, wie ein Scharnier oder Strahlungsabsorber, an der Ringnut (64) der Mutter (6) befestigbar sind.

Fig.1

Fig.2

Fig.3

Fig.7

Fig.8

Fig.9

Fig 4.

Fig 5.

Fig 6.

Europäisches
Patentamt

# EUROPÄISCHER RECHERCHENBERICHT

Nummer der Anmeldung

EP 99 11 6556

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | FR 2 581 826 A (SAREL SA) 14. November 1986 (1986-11-14) * Seite 1, Zeile 1 - Seite 3, Zeile 17 * * Seite 6, Zeile 1 - Zeile 26; Abbildungen 2,3 * | 1-3 | H02B1/28 |
| Y | FR 1 373 144 A (MERLIN & GERIN) 6. Januar 1965 (1965-01-06) * Abbildungen 2,3 * | 1-3 | |
| A | DE 298 06 876 U (H J BERNSTEIN GMBH) 4. Juni 1998 (1998-06-04) * Abbildung 3 * | 1 | |
| | | | **RECHERCHIERTE SACHGEBIETE (Int.Cl.7)** |
| | | | H02B H02G H05K |

Der vorliegende Recherchenbericht wurde für alle Patentansprüche erstellt

| Recherchenort | Abschlußdatum der Recherche | Prüfer |
|---|---|---|
| DEN HAAG | 19. Oktober 1999 | Castanheira Nunes, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 6556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-1999

| Im Recherchenbericht angeführtes Patentdokument | Datum der Veröffentlichung | Mitglied(er) der Patentfamilie | Datum der Veröffentlichung |
|---|---|---|---|
| FR 2581826 A | 14-11-1986 | KEINE | |
| FR 1373144 A | 06-01-1965 | KEINE | |
| DE 29806876 U | 04-06-1998 | KEINE | |

EPO FORM P0461

Für nähere Einzelheiten zu diesem Anhang : siehe Amtsblatt des Europäischen Patentamts, Nr.12/82